**Europäisches Patentamt**

**European Patent Office**

**Office européen des brevets**

(19)

(11) Veröffentlichungsnummer: **0 085 826**
**B1**

(12) # EUROPÄISCHE PATENTSCHRIFT

(45) Veröffentlichungstag der Patentschrift:
**15.10.86**

(51) Int. Cl.⁴: **E 21 D 20/02**

(21) Anmeldenummer: **83100057.5**

(22) Anmeldetag: **05.01.83**

(54) **Verfahren zur Befestigung von Ankerstangen in Bohrlöchern.**

(30) Priorität: **07.01.82 DE 3200201**

(43) Veröffentlichungstag der Anmeldung:
**17.08.83 Patentblatt 83/33**

(45) Bekanntmachung des Hinweises auf die Patenterteilung:
**15.10.86 Patentblatt 86/42**

(84) Benannte Vertragsstaaten:
**AT CH DE FR GB LI SE**

(56) Entgegenhaltungen:
**DE-A-2 256 388**
**DE-B-2 345 913**
**DE-B-2 436 029**
**DE-B-2 623 346**
**DE-B-2 705 751**

**Chemical Abstracts, Band 95, 1981, Columbus, Ohio, USA MITSUI NISSO URETHANE K.K. "Adhesive compositions for anchor bolts" Seite 48, Spalte 2, Abstract no. 188295p**

(73) Patentinhaber: **Bergwerksverband GmbH, Franz-Fischer- Weg 61, D-4300 Essen 13 (DE)**

(72) Erfinder: **Cornely, Wolfgang, Dr., Wehlingsweg 8, D-4390 Gladbeck (DE)**
Erfinder: **Mehesch, Hans, Dr., Ernestinenstrasse 220, D-4300 Essen 11 (DE)**
Erfinder: **Meyer, Frank, Dr., Potthoffs Börde 22, D-4300 Essen 1 (DE)**

(74) Vertreter: **Frühbuss, Heinrich, Dr.rer.nat., Hubert-Reissner- Strasse 5a, D-8032 Gräfelfing b. München (DE)**

## Beschreibung

Die Erfindung betrifft ein Verfahren zur Befestigung von Ankerstangen in Bohrlöchern gemäß dem Oberbegriff des geltenden Hauptanspruches sowie eine Zweikammerpatrone zur Durchführen des Verfahrens.

Es ist bekannt, ungesättigte Polyesterharze und Polyurethane als Reaktivharzmasse für die Befestigung von Ankerstangen in Bohrlöchern zu verwenden. Zu diesem Zweck sind zur Bildung der Polyurethane die beiden Komponenten Polyisocyanat und Polyol getrennt in zwei Kammern einer Patrone, z. B. aus Kunststoffolie oder extrudierter spröder Masse (vergl. DE-C- 26 41 776) untergebracht. Durch drehendes Einbringen des Ankers in die Bohrlöcher werden die Kammern zerstört und die beiden Komponenten vermischt, so daß sie unter Bildung von Polyurethanen miteinander reagieren. Gemäß der DE-B- 12 05 038 und der DE-B- 17 84 458 geliert das Polyurethanharz erst nach zwei Stunden und härtet nach 5 bis 6 Stunden aus. Anwendungstechnisch notwendig sind jedoch weitaus kürzere Gelier- und Härtungszeiten, da die Ankerstange in aufwärtsgerichteten Bohrlöchern bis zum Erreichen des Gelierpunktes gegen Herausrutschen gesichert werden muß und der Anker, vor allem im Tunnel- und Bergbau, möglichst frühzeitig belastbar sein soll.

Die DE-B- 27 05 751 beschreibt ein System, das diesen Nachteil dadurch vermeidet, daß tertiäre Aminogruppen enthaltende Polyole als Hydroxyl-Komponente dienen, die gleichzeitig katalytisch wirksam sind, so daß Gelier- und Härtungszeiten von weniger als einer Minute erreicht werden. Laut Anspruch 3 dieser Auslegeschrift ist jedoch der Zusatz von Wasser auf 0,5 Gew.-%, bezogen auf das Polyol, begrenzt. Bei höheren Wassermengen, z.B. feuchten Bohrlöchern, schäumt die Mischung so stark auf, dass der gebildete ausgehärtete Schaum keine nennenswerte Zugbelastung aufnehmen kann.

Aus der GB-A-1215360 ist bekannt, dass man die Zugfestigkeit von Polyurethanen dadurch erhöhen kann, dass man überschüssige Diarylmethandiisocyanate mit Polyethern, insbesondere difunktionellen Polypropylenethern mit einem Molekulargewicht von 500 bis 4000, insbesondere 1000 bis 2000, umsetzt und die erhaltenen Prepolymeren nachträglich durch Reaktion mit einem aliphatischen Polyol härtet. Konkrete Gelier- und Härtungszeiten, bezogen auf Umgebungstemperatur, sind nicht offenbart, desgleichen nicht nähere Angaben über in Betracht kommende Polyurethane und die mit diesen erzielbaren Zugfestigkeiten in Anwesenheit von Wasser im Bohrloch.

Der Erfindung liegt die Aufgabe zugrunde, ein Verfahren gemäss Oberbegriff des Hauptanspruches auch in nassen Bohrlöchern bei gleichzeitig gut einstellbaren, im wesentlichen kurzen Gelier- und Härtungszeiten verwendbar zu machen.

Diese Aufgabe wird erfindungsgemäss dadurch gelöst, dass als Polyisocyanat-Komponente Prepolymere aus der Umsetzung von Polyisocyanaten mit einem oder mehreren difunktionellen Polyolen des Molekulargewichtsbereiches 500 bis 5.000, vorzugsweise 1.600 bis 3.000, dienen und als Hydroxyl-Komponente Polyole mit OH-Zahlen von 250 bis 2.000, vorzugsweise 1.000 bis 1.850 oder Wasser verwendet werden.

Bereits in der DE-A- 24 48 958 wird auf die Gefahr des Wassers für die Abdichtung von geologischen Formationen hingewiesen und Prepolymere aus Toluylendiisocyanat und Gemische aus Diphenylmethandiisocyanat mit dessen Isomeren und höherkernigen Anteilen, also das Roh-MDI, als Isocyanat-Komponente einerseits und Hydroxyl-Komponenten des Molekulargewichtsbereiches von 400 - 600 andererseits empfohlen. Zur Überwindung des nachteiligen Einflusses des Wassers sollen gewisse Beschleuniger und Schaumstabilisatoren dem System zugesetzt werden. Bei diesem Verfahren wird das Reaktivharz unmittelbar in geologische Formationen eingepreßt und somit nicht die Aufgabe gelöst, Ankerstangen in Bohrlöchern zu verkleben. Prepolymere aus Toluylendiisocyanat kommen für die Praxis aus toxikologischen Gründen ohnehin nicht in Betracht. Angaben über die zu ihrer Herstellung empfehlenswerte Hydroxyl-Komponente sind dieser DE-A nicht zu entnehmen.

Der wesentliche Vorteil des Verfahrens gemäß der Erfindung besteht darin, daß Wasser ganz oder teilweise als Hydroxyl-Komponente dienen kann, so daß eine hervorragende Haftung der Ankerstangen auch in feuchten Bohrlöchern erreicht wird. Demgegenüber versagen die mit Polyesterharzen und Härtern gefüllten Zweikammer-Patronen, wenngleich diese Patronen in trockenen Bohrlöchern bislang die höchsten Haftfestigkeiten erreichen.

Aus arbeitshygienischen und technischen Gründen wird jedoch seit längerem das nasse Bohren mit simultaner Wassereindüsung in das Bohrlochtiefste gegenüber dem trockenen Bohren bevorzugt, so daß die Verwendung von mit Polyesterharzen gefüllten Patronen kaum noch möglich ist, zumal diese das gesundheitsschädliche Styrol in größeren Mengenenthalten.

Durch die Verwendung von Wasser oder wäßrigen Lösungen als Hydroxyl-Komponente wird des weiteren der Vorteil erzielt, daß das Harz im Verlauf der Polyurethanbildung in geringem, jedoch wegen des Prepolymers als Isocyanat-Komponente nicht zu starkem Maße aufschäumt. Durch die damit verbundene Volumenvergrößerung wird ein besserer Formschluß zwischen Harzmasse und Bohrlochwandungen erzielt, was vor allem bei ausgeschlagenen Bohrlöchern und klüftigem Gebirge von Bedeutung ist.

Als Polyisocyanat-Komponente zur Herstellung des Prepolymers kommen die in der Polyurethan-Chemie bekannten, bei Raumtemperatur flüssigen Roh-Polyisocyanate in Betracht, wie sie durch Anilin/Formaldehyd-Kondensation und anschließende Phosgenierung hergestellt werden. Auch die Modifizierungsprodukte derartiger Polyisocyanatgemische der Isocyanat-Reihe, z. B. deren Carbodiimidgruppen, Biuretgruppen, Urethangruppen oder Allophanatgruppen enthaltende Derivate sind geeignet. Derartige Polyisocyanate sind z. B. beschrieben bei Ullmann, Verlag Chemie, 4. Auflage, Band 19, Seiten 303 bis 305.

Besonders geeignet sind die bei Raumtemperatur flüssigen, durch Phosgenierung von Anilin/Formaldehyd-Kondensation erhaltenen Polyisocyanatgemische, die im wesentlichen aus isomeren Diisocyanatodiphenylmethanen und deren oligomeren Homologen bestehen ("MDI"), da diese Isocyanate eine mittlere Funktionalität von 2,1 - 3,5, vorzugsweise von 2,2-2,8, besitzen und eine Funktionalität in diesem Bereich für eine gute Vernetzung mit den linearen Polyolen erwünscht ist.

Bei den Polyolen, die zur Herstellung der Prepolymere verwendet werden, handelt es sich um difunktionelle Polyole mit mittleren Molekulargewichten zwischen 800 und 5.000, vorzugsweise 1.600 und 3.000, mithin um langkettige difunktionelle Polyole. Dies entspricht einer OH-Zahl von 140 bis 22, bzw. vorzugsweise dem OH-Zahl-Bereich von 70 - 37. In Betracht kommen die Propylenoxid-, Ethylenoxid- oder gemischten Propylenoxid/Ethylenoxid-Polyether-Polyole, deren Polymerisation durch Wasser oder ein niedermolekulares Diol, wie Ethylenglykol, Propan-1,2-diol, Propan-1,3-diol oder Butan-1,4-diol, gestartet worden ist. Oben genannte Polyisocyanate und Polyetherpolyole werden nach im Grunde bekannten Verfahren (s. Vieweg-Höchtlen, Kunststoff-Handbuch, VIII, S. 447 ff.) zu Polyisocyanat-Prepolymeren vorpolymerisiert. Polyisocyanate werden hierbei in großem Überschuß gegenüber den Polyetherpolyolen eingesetzt, um die Viskosität des resultierenden Polyisocyanat-Prepolymeren innerhalb der Grenzen der Handhabbarkeit zu halten. Demgemäß soll die Viskosität der Polyisocyanat-Prepolymeren unterhalb von 50.000 m Pa. s, vorzugsweise unter 10.000 m Pa. s, liegen. Werden demgemäß tri- und höherfunktionelle Polyole zugesetzt, z. B. in Mengen über 10 Gew.-%, so steigt die Viskosität so hoch an, daß keine wirklich brauchbaren Resultate mit der Zweikammerpatrone erzielt werden können.

Als Hydroxylkomponente für die erfindungsgemäße Reaktivharzmasse sind besonders Polyole mit OH-Zahlen von 250 bis 2.000, vorzugsweise von 1.000 bis 1.850, geeignet. Sie bewirken eine schnelle und durchgehende Härtung des Harzes. Besonders geeignet sind kurzkettige Polyole, wie Ethylenglykol, Diethylenglykol, Triethylenglykol, Glycerin, Propan-1,2-diol, Propan-1,3-diol, Butan-1,4-diol. Gelöst in diesen Polyolen oder in Wasser sind auch feste Polyole als Hydroxylkomponente geeignet, wie z. B. Pentaerythrit, Sorbit, Mannit, Fructose, Galactose, Rohrzucker, Melasse, Stärke, Hydroxyethylcellulose, Polyvinylalkohol. Auch Wasser allein kommt als Hydroxyl-Komponente in Betracht.

Nach dem Verfahren gemäß der vorliegenden Erfindung können das Prepolymer und/oder die Hydroxyl-Komponenten ein tertiäres Amin enthalten oder die Hydroxyl-Komponente ein Aminogruppen enthaltendes Polyol darstellen.

Hervorragend geeignet sind z. B. Polyole, die eine oder mehrere Aminogruppen enthalten. Beispiele für diese Polyole sind Triethanolamin, Diethanolamin, Alkoxylierungsprodukte von Ammoniak, Triethanolamin oder Ethylendiamin mit Epoxiden, wie Ethylenoxid und Propylenoxid.

Geeignete tertiäre Amine sind beispielsweise N,N-Dimethylcyclohexylamin, Triethylamin, Dimethylethanolamin, Tributylamin, Diazabicyclo-(2,2,2)-octan, N-Methylmorpholin, N,N,N',N'-Tetramethylethylendiamin. Derartige Amine werden zweckmäßigerweise in Mengenanteilen von 0,2 bis 5 % zugesetzt.

Nach dem Verfahren gemäß der vorliegenden Erfindung kann weiterhin eine oder jede der beiden Komponenten eine metallorganische Verbindung als Katalysator für die Polyurethan-Reaktion enthalten.

Geeignete metallorganische Verbindungen sind Salze organischer Säuren mit Metallen der Gruppen IIb und IVb des Periodensystems und Übergangsmetalle, insbesondere Verbindungen des Zinns, wie beispielsweise Zinndilaurat, Zinndiethylhexoat, Zinndinaphthenat, Zinndistearat, Dibutylzinndilaurat, Dimethylzinndilaurat, Dioctylzinndistearat, Dibutylzinndistearat und andere Verbindungen der allgemeinen Formeln $Sn(OOC-R)_2$ und $R'_2Sn(OOCR)_2$, wobei R und R' aliphatische Reste bezeichnen. Zweckmäßigerweise werden im allgemeinen 0 - 2 Gew.-% dieser Verbindungen der Reaktivharzmasse zugesetzt.

Es ist vorteilhaft für die Verklebungsfestigkeit des Dübels oder der Ankerstange, der Hydroxyl-Komponente und/oder der Prepolymer-Komponente Füllstoffe zuzusetzen. Als Füllstoffe kommen beispielsweise gemahlener Kalkstein, Quarzmehl, Schwerspat oder Glasfasern in Betracht. Es kommen Zusätze von 10 bis 80 Gew.-%, vorzugsweise 20 - 70 Gew.-% Füllstoff, bezogen auf den gesamten Patroneninhalt, in Betracht.

Aufgrund der einstellbaren, kurzen Gelier- und Aushärtezeiten der vermischten Komponenten ist es möglich und sinnvoll, zum Setzen von Ankern automatische Bohr- und Setzmaschinen zu verwenden.

Aus dem gleichen Grunde ist die erfindungsgemäße Patrone auch besonders für den Einsatz in aufwärtsgerichteten Bohrlöchern geeignet, da das Harz der zerstörten Patrone nicht mehr aus dem Bohrloch auslaufen kann und so Gefährdung der Arbeiter und Materialverluste vermieden werden können.

Das Einbringen der Reaktivharzmasse in das Bohrloch erfolgt, wie gesagt, mit Hilfe einer Zweikammerpatrone, bei der in einer Kammer die Prepolymerkomponente, in der anderen, in der Regel in einer Menge von 5 - 25 Gew.-%, bezogen auf das Prepolymer, die Hydroxyl-Komponente untergebracht ist. Beim drehenden Einbringen des Dübels oder der Ankerstange wird die Patrone unter Mischen der beiden Komponenten zu dem Reaktivharz zerstört.

**Beispiel 1**

Bei einer konstanten Temperatur von 40°C werden 500 g eines Polypropylenglykols auf Basis Propan-1,2-diol mit der OH-Zahl 58 und einem mittleren Molekulargewicht von 2.000 zu 1.000 g eines Polyisocyanates auf Basis von Anilin-Formaldehyd-Kondensaten mit einer Viskosität von 220 m Pa. s und einem NCO-Gehalt von 31 % unter Schutzgas zugetropft und anschließend noch 12 h bei 60°C gerührt. Das so hergestellte Prepolymer hat einen NCO-Gehalt von 19 % und eine Viskosität von 2.450 m Pa. s.

100 g dieses Prepolymers sowie 14 g Ethylenglykol (OH-Zahl 1.820) werden in separate Kammern einer aus 0,1 mm starker Polyamid-Folie hergestellten Zweikammer-Patrone gefüllt. Die Patrone hat eine Länge von 26 cm und einen Durchmesser von 24 mm.

Nach Einführen in ein nasses Bohrloch von 28 mm Durchmesser und 2 m Tiefe wird diese Patrone durch eine drehend nachgeschobene Ankerstange zerstört. Gelierzeit des Harzes aus den vermischten Komponenten: 50 s. Nach 24 h konnte die Ankerstange erst mittels Zugbelastung von 23 t aus dem Bohrloch gezogen werden.

Zum Vergleich wird die Patrone mit einem Prepolymer gefüllt, das durch Polyaddition von 1.000 g des obigen Polyisocyanates mit 500 g Polypropylenglykol der OH-Zahl 260 bzw. des mittleren Molekulargewichtes 470 hergestellt war. Dieses Prepolymer hat einen NCO-Gehalt von 12,9 % und eine Viskosität von 900.000 m Pa. s.

100 g dieses Prepolymers sowie 10 g Ethylenglykol werden in separate Kammern der obigen Zweikammerpatrone gefüllt und wie vorstehend für das Verkleben einer Ankerstange in einem nassen Bohrloch verwandt. Gelierzeit des Harzes aus den vermischten Komponenten: 40 s. Nach 24 h konnte die Ankerstange bereits mittels einer Zugbelastung von 8 t aus dem Bohrloch gezogen werden.

Zum Vergleich mit dem Verfahren gemäß der DE-C- 27 05 751 wird die Patrone einerseits mit 100 g des obigen Polyisocyanates und andererseits mit 40 g eines aus Ethylendiamin und Propylenoxyd hergestellten Polyols der OH-Zahl 640 und des mittleren Molekulargewichtes von 310 in Mischung mit 0,5 Gew.-Teilen Wasser gefüllt. Die Gelierzeit des im nassen Bohrloch gebildeten Harzes betrug eine Minute. Nach 24 h konnte die Ankerstange bereits mittels einer Zugbelastung von 6 t aus dem Bohrloch gezogen werden.

**Beispiel 2**

Bei einer konstanten Temperatur von 40°C werden 1.000 g eines Polypropylenglykols auf Basis Ethylenglykol mit der OH-Zahl 58 und einem mittleren Molekulargewicht von 2.000 zu 1.000 g eines Polyisocyanates auf Basis von Anilin-Formaldehyd-Kondensaten mit einer Viskosität von 125 m Pa. s und einem NCO-Gehalt von 31 % unter Schutzgas zugetropft und anschließend noch 12 h bei 60°C gerührt. Das so hergestellte Prepolymer hat einen NCO-Gehalt von 13 % und eine Viskosität von 10.000 m Pa. s.

80 g dieses Prepolymers, vermischt mit 50 g Quarzmehl, sowie 16 g 50%iges, wäßriges Glycerin werden in separate Kammern einer aus 0,1 mm starker Polyamid-Folie hergestellten Zweikammerpatrone gefüllt. Die Patrone hat eine Länge von 26 cm und einen Durchmesser von 24 mm.

Nach Einführen in ein nasses Bohrloch von 28 mm Durchmesser und 2 m Tiefe wird diese Patrone durch eine drehend nachgeschobene Ankerstange zerstört. Gelierzeit des Harzes aus den vermischten Komponenten: 50 s. Nach 24 h konnte die Ankerstange erst mittels Zugbelastung von 22 t aus dem Bohrloch gezogen werden.

**Beispiel 3**

Bei einer konstanten Temperatur von 40°C werden 750 g eines Polyprodylenglykols auf Basis Butan-1,3-diol mit der OH-Zahl 58 und einem mittleren Molekulargewicht von 2.000 zu 1.000 g eines Polyisocyanates auf Basis von Anilin-Formaldehyd-Kondensaten mit einer Viskosität von 125 m Pa.s und einem NCO-Gehalt von 31 % unter Schutzgas zugetropft und anschließend noch 12 h bei 60°C gerührt. Das so hergestellte Prepolymer hat einen NCO-Gehalt von 17 % und eine Viskosität von 5.700 m Pa. s.

60 g dieses Prepolymers, vermischt mit 90 g Steinmehl, sowie 13 g 70%iger Melasse in Mischung mit 2 g Triethylendiamin werden in separate Kammern einer aus extrudierbarer Masse gemäß DE-C- 26 41 776 hergestellten Zweikammerpatrone gefüllt. Die Patrone hat eine Länge von 26 cm und einen Durchmesser von 24 mm.

Nach Einführen in ein nasses Bohrloch von 28 mm Durchmesser und 2 m Tiefe wird diese Patrone durch eine drehend nachgeschobene Ankerstange zerstört. Gelierzeit des Harzes aus den vermischten Komponenten: 50 s. Nach 24 h konnte die Ankerstange erst mittels Zugbelastung von 20 t aus dem Bohrloch gezogen werden.

**Beispiel 4**

Bei einer konstanten Temperatur von 40°C werden 1.000 g eines Polypropylenglykols mit der OH-Zahl 58 und einem mittleren Molekulargewicht von 2.000 zu 1.000 g eines Polyisocyanates auf Basis von Anilin-Formaldehyd-Kondensaten mit einer Viskosität von 125 m Pa. s und einem NCO-Gehalt von 31 % unter Schutzgas zugetropft und anschließend noch 12 h bei 60°C gerührt. Das so hergestellte Prepolymer hat einen NCO-Gehalt von 19 % und eine Viskosität von 10.000 m Pa. s.

80 g dieses Prepolymers, gefüllt mit 30 g Flugasche, sowie 14 g einer 90%igen, wäßrigen Lösung von Triethanolamin werden in separate Kammern einer aus Glasrohren mit 1 mm Wandstärke gemäß US-A- 31 08 443 hergestellten Zweikammerpatrone gefüllt. Die Patrone hat eine Länge von 26 cm und einen Durchmesser von 24 mm.

Nach Einführen in ein nasses Bohrloch von 28 mm Durchmesser und 2 m Tiefe wird diese Patrone durch eine drehend nachgeschobene Ankerstange zerstört. Gelierzeit des Harzes aus den vermischten Komponenten: 100 s. Nach 24 h konnte die Ankerstange erst mittels Zugbelastung von 25 t aus dem Bohrloch gezogen werden.

**Beispiel 5**

Bei einer konstanten Temperatur von 40°C werden 1.000 g eines Polypropylenglykols mit der OH-Zahl 58 und einem mittleren Molekulargewicht von 2.000 zu 1.000 g eines Polyisocyanates auf Basis von Anilin-Formaldehyd-Kondensaten mit einer Viskosität von 125 m Pa. s und einem NCO-Gehalt von 31 % unter Schutzgas zugetropft und anschließend noch 12 h bei 60°C gerührt. Das so hergestellte Prepolymer hat einen NCO-Gehalt von 19 % und eine Viskosität von 10.000 m Pa. s.

100 g dieses Prepolymers sowie 1 g Triethylendiamin, gelöst in 20 g Wasser, werden in separate Kammern einer aus 0,1 mm starker Polyamid-Folie hergestellten Zweikammerpatrone gefüllt. Diese Patrone hat eine Länge von 26 cm und einen Durchmesser von 24 mm.

Nach Einführen in ein trockenes Bohrloch von 28 mm Durchmesser und 2 m Tiefe wird diese Patrone durch eine drehend nachgeschobene Ankerstange zerstört. Gelierzeit des Harzes aus den vermischten Komponenten: 50 s. Nach 24 h konnte die Ankerstange erst mittels Zugbelastung von 24 t aus dem Bohrloch gezogen werden.

**Patentansprüche**

1. Verfahren zum Verkleben von Ankerstangen in Bohrlöchern, bei dem die Ankerstange in ein mit einer Polyisocyanat-Komponente und einer Hydroxyl-Komponente gefülltes Bohrloch drehend eingestossen wird, wobei die Ankerstange in eine mit Polyisosocyanat-Komponente gefüllte und in eine mit Hydroxyl-Komponente gefüllte Patrone oder in eine Zweikammer-Patrone, in der die beiden Komponenten getrennt voneinander vorliegen, eingestossen wird, dadurch gekennzeichnet, dass als Polyisocyanat-Komponente Prepolymere aus der Umsetzung von Polyisocyanaten mit einem oder mehreren difunktionellen Polyolen des Molekulargewichtsbereiches 800 bis 5.000, vorzugsweise 1.600 bis 3.000, dienen und als Hydroxyl-Komponente Polyole mit OH-Zahlen von 250 bis 2.000, vorzugsweise 1.000 bis 1.850 und/oder Wasser verwendet werden.

2. Verfahren nach Anspruch 1, dadurch gekennzeichnet, daß die zur Herstellung der Prepolymeren verwendeten Polyisocynate aus Phosgenierungsprodukten von Anilin-Formaldehyd-Kondensaten bestehen.

3. Verfahren nach Anspruch 1 - 2, dadurch gekennzeichnet, daß als Hydroxyl-Komponente wäßrige Lösungen fester oder flüssiger Polyole dienen.

4. Verfahren nach Anspruch 1 -3, dadurch gekennzeichnet, daß eine der beiden Komponenten ein tertiäres Amin enthält oder die Hydroxyl-Komponente ein Aminogruppen enthaltendes Polyol ist.

5. Verfahren nach Anspruch 1 - 3, dadurch gekennzeichnet, daß eine der beiden Komponenten eine metallorganische Verbindung als Katalysator für die Polyurethan-Reaktion enthält.

6. Verfahren nach Anspruch 1 - 5, dadurch gekennzeichnet, daß der Hydroxyl-Komponente und/oder der Prepolymer-Komponente Füllstoffe zugesetzt sind.

7. Zweikammer-Patrone zur Ausführung des Verfahrens gemäß den Ansprüchen 1 - 6, dadurch gekennzeichnet, daß die eine Kammer mit dem Prepolymer und die andere Kammer in einer Menge von 5 - 25 Gew.-%, bezogen auf das Prepolymer, mit der Hydroxyl-Komponente gefüllt ist.

8. Patrone gemäß Anspruch 7, dadurch gekennzeichnet, daß der Prepolymer- und/oder der Hydroxyl-Komponente 10-80 Gew.-%, vorzugsweise 20 - 70 Gew.-%, eines inerten Füllstoffes, bezogen auf die gesamte Patronenfüllung, zugesetzt sind.

9. Patrone gemäss Anspruch 7 oder 8, dadurch gekennzeichnet, daß das Volumen der einen für das prepolymer bestimmten Kammer

- 95 % des gesamten Kammerinhaltes beträgt.

## Claims

1. Method of fastening anchor bolts in drilling holes in which an anchor bolt is pushed under rotating movements into a drilling hole filled with a polyisocynate component and a hydroxyl component and in which the drilling bolt is introduced into a cartridge which is filled with a polyisocyanate component and into a catridge which is filled with a hydroxyl component or into a twin-chamber catridge with both components separated one from the other the improvement comprising using as polyisocynate component the prepolymeres which has been prepared from polyisocyanates and one or more bifunctional polyols in a molecular wheight range between 800 and 5,000, preferably between 1,600 and 3,000 and as hydroxyl component polyols with OH numbers of 250 - 2,000, preferably 1.000 - 1.850 and/or water.

2. Method as per claim 1, wherein the polyisocyanates for the producing of the prepolymeres consist of phosgenation products from anilin formaldehyd condensates.

3. Method as per claim 1 through 2, wherein aqueous solutions of solid or liquid polyols are used as hydroxyl component.

4. Method as per claim 1 through 3, wherein one of both components contains a tertiary amine or the hydroxyl component is constituted by a polyol containing amino groups.

5. Method as per claim 1 through 3, wherein one or both components contain an organometallic compound as catalyst for the polyurethane reaction.

6. Method as per claim 1 through 5, wherein inert fillers are added to the hydroxyl component and/or the prepolymer component.

7. Twin-chamber cartridge for practice of the method as per claim 1 through 6, comprising one chamber filled with the prepolymer and the other chamber filled with a quantity of 5 - 25% by weight, relativ to the prepolymer, of a hydroxyl component.

8. Cartridge as per claim 7, comprising 10 - 80% by weight, preferably 20 - 70% by weight, relative to the total catridge filling, of an inert filler are added to the prepolymer and/or the hydroxyl component.

9. Cartridge as per claim 7 through 8 wherein the volume of the one chamber which is to contain the prepolymer comes to 65 - 95% of the total volume of both chambers.

## Revendications

1. Procédé de consolidation de tiges d'ancrage dans des trous de mine, procédé dans lequel les tiges d'ancrage sont enfoncées en tournant dans le trou de mine rempli avec un constituant polyisocyanate et un constituant hydroxylé, les tiges d'ancrage étant enfoncées dans une cartouche remplie du constituant polyisocyanate et une cartouche remplie du constituant hydroxylé ou dans une cartouche à deux compartiments, dans lesquelles les deux constituants se trouvent séparés, caractérisé en ce que l'on utilise, comme constituant polyisocyanate, des prépolymères obtenus par réaction de polyisocyanates avec un ou plusieurs polyols difonctionnels ayant un domaine de masses moléculaires de 800 à 5000, de préférence de 1600 à 3000 et, comme constituant hydroxylé, des polyols avec un indice d'OH de 250 à 2000, de préférence de 1000 à 1850 et/ou de l'eau.

2. Procédé suivant la revendication 1, caractérisé en ce que les polyisocyanates utilisés pour la préparation des prépolymères se composent de produits de phosgénation de condensats aniline-formaldéhyde.

3. Procédé suivant les revendications 1-2, caractérisé en ce qu'on utilise comme constituant hydroxylé des solutions aqueuses de polyols solides ou liquides.

4. Procédé suivant les revendications 1-3, caractérisé en ce qu'un des deux constituants contient une amine tertiaire le constituant hydroxylé est un polyol contenant des groupes amino.

5. Procédé suivant les revendications 1-3, caractérisé en ce qu'un des deux constituants contient un composé organométallique comme catalyseur pour la réaction du polyuréthanne.

6. Procédé suivant les revendications 1-5, caractérisé en ce que des charges sont ajoutées au constituant hydroxylé et/ou au constituant prépolymère.

7. Cartouche à deux compartiments pour l'exécution du procédé conforme aux revendications 1-6, caractérisé en ce que le premier compartiment est rempli du prépolymère et l'autre compartiment est rempli du constituant hydroxylé dans une proportion de 5 à 25% en poids par rapport au prépolymère.

8. Cartouche suivant la revendication 7, caractérisé en ce qu'on ajoute au constituant prépolymère et/ou au constituant hydroxylé 10 à 80% en poids, de préférence 20 à 70% en poids, d'une charge inerte, par rapport au contenu total de la cartouche.

9. Cartouche suivant les revendications 7 ou 8, caractérisée en ce que le volume du premier compartiment destiné au prépolymère représente 65 à 95% du contenu total des compartiments.